# EUROPEAN PATENT APPLICATION

(11) **EP 4 450 559 A1**
(43) Date of publication of application: **23.10.2024**
(21) Application number: 22907264.0
(22) Date of filing: 05.12.2022
(51) Int. Cl.: C08L 83/07, C08L 83/05

(54) **CURABLE LIQUID SILICONE COMPOSITION AND CURING METHOD FOR SAID COMPOSITION**

(30) Priority: 16.12.2021 JP 2021203997
(71) Applicant: SHIN-ETSU CHEMICAL CO., LTD., Tokyo 1000005 (JP)
(72) Inventor: HARA Hiroyasu, Annaka-shi, Gunma 379-0224 (JP)
(74) Representative: Mewburn Ellis LLP
(86) International application number: PCT/JP2022/044675
(87) International publication number: WO 2023/112736

(57) **Abstract**

Provided is a curable liquid silicone composition comprising two types of platinum catalysts which are a platinum catalyst that is activated by irradiation with UV rays to act as a hydrosilylation addition reaction catalyst and an aerobic platinum catalyst mixture that is activated by being in contact with moisture and/or oxygen, particularly with atmospheric moisture (humidity) and/or oxygen to act as hydrosilylation addition reaction catalyst. The curable liquid silicone composition has long-term storage stability as a single-liquid composition. Said composition is a curable liquid silicone rubber composition or a curable liquid silicone gel composition that, after being irradiated with UV rays at room temperature and further being exposed to the atmosphere for a prescribed time, exhibits excellent UV curing properties and favorable curing properties of a non-UV-irradiated part (shadow parts).

## Description

### TECHNICAL FIELD

This invention relates to a curable liquid silicone composition (specifically curable liquid silicone rubber or gel composition) comprising two platinum base catalysts, a platinum base catalyst adapted to be activated with UV and a platinum base catalyst mixture adapted to be activated with water and/or oxygen, the composition curing into a silicone rubber cured product (or silicone elastomer) or silicone gel cured product, and a method of curing the curable liquid silicone composition.

### BACKGROUND ART

In view of the demands for energy saving and sustainable development goals (SDGs), the requirement to cure curable liquid silicone compositions without heating becomes stronger in these years. Preference is also given to curable liquid silicone compositions of one pack type for convenient use of the compositions and for the purpose of preventing any mistakes in the use stage.

In connection with curable liquid silicone compositions, especially curable liquid silicone compositions of one pack type and crosslinking reaction type which can be cured without heating, crosslinking reaction encompasses condensation reaction, UV radical reaction and hydrosilation addition reaction. Of these compositions, some have an extremely short storage life and some use catalysts which can be activated with UV. Since all these compositions lack deep-section cure or UV-shaded section cure, their applicable field is limited.

The following documents are cited as the prior art technology pertinent to the present invention.

### PRIOR ART DOCUMENTS

### PATENT DOCUMENTS

Patent Document 1: USP 4,510,094
Patent Document 2: USP 4,530,879
Patent Document 3: JP 6020740

### SUMMARY OF INVENTION

### TECHNICAL PROBLEM

An object of the invention, which has been made under the above-mentioned circumstances, is to provide a curable liquid silicone composition which has long-term one-pack storage stability in a light-shielded, closed container at refrigerating to room temperature (-5°C to 38°C), in which a UV-irradiated section is cured and even a UV-non-irradiated (shaded) section or a shadow section where UV does not reach is cured without heating, i.e., at room temperature (23°C±15°C) by irradiating UV and by bringing into contact with water and/or oxygen, specifically water (or moisture) and/or oxygen in the ambient air, the composition being able to form a silicone rubber or gel cured product.

### SOLUTION TO PROBLEM

Making extensive investigations to attain the above object, the inventor has found that a curable liquid silicone composition comprising two platinum base catalysts, a platinum base catalyst adapted to be activated with UV to function as a hydrosilation addition reaction catalyst and an aerobic platinum base catalyst mixture adapted to be activated by contact with water and/or oxygen, specifically water (moisture) and/or oxygen in the ambient air to function as a hydrosilation addition reaction catalyst, has long-term storage stability as a one-pack type composition. It is a curable liquid silicone rubber or gel composition which displays effective UV cure and satisfactory UV-non-irradiated (or shaded) section cure when the composition is irradiated with UV at room temperature and then exposed to the ambient air for a predetermined time. The invention is predicated on this finding.

According to the invention, a liquid silicone composition is cured into a silicone rubber or gel through a curing (or crosslinking reaction) system utilizing hydrosilation addition reaction with the aid of a platinum base catalyst adapted to be activated with UV and an aerobic platinum base catalyst mixture adapted to be activated with water and/or oxygen. Surprisingly, the curable liquid silicone composition of the invention has "one-pack storage stability in a light-shielded, closed container" at refrigerating to room temperature (in the range of -5°C to 38°C). At the same time, not only a UV-irradiated section, but also a shadow section can be cured without heating, i.e., at room temperature (23°C±15°C) because the catalytic function is activated by "irradiating UV" and bringing into "contact with air (water (or moisture) and/or oxygen in the ambient air)" so that hydrosilation addition reaction may take place.

Accordingly, the invention provides a curable liquid silicone composition and a method of curing the same, as defined below.
[1] A curable liquid silicone composition comprising
   (A) a diorganopolysiloxane having at least one alkenyl group per molecule,
   (B) an organohydrogenpolysiloxane having at least two silicon-bonded hydrogen atoms per molecule, in an amount to provide 0.5 to 4 moles of silicon-bonded hydrogen in component (B) per mole of alkenyl group in component (A),
   (C) a platinum base catalyst adapted to be activated with UV, in an amount to provide 0.1 to 1,000 ppm by weight of platinum atom in component (C) based on the total weight of components (A) and (B), and
   (D) a platinum base catalyst mixture adapted to be activated with water and/or oxygen, in an amount to provide 0.1 to 1,000 ppm by weight of platinum atom in component (D) based on the total weight of components (A) and (B).
[2] The curable liquid silicone composition of [1] which is of one pack type.
[3] The curable liquid silicone composition of [1] or [2] wherein component (D) is an aerobic platinum base catalyst mixture consisting of a reaction mixture of a platinum-alkenyl-containing organosiloxane complex with an organosilicon compound having at least one silicon-bonded hydrogen atom per molecule in an amount to provide a molar excess of silicon-bonded hydrogen relative to the alkenyl group in the platinum-alkenyl-containing organosiloxane complex.
[4] The curable liquid silicone composition of any one of [1] to [3], further comprising (E) 0.01 to 5% by weight based on the overall composition of a dehydrating agent.
[5] The curable liquid silicone composition of any one of [1] to [4], further comprising (F) 0.1 to 1 mole per mole of platinum in the composition of a hydrosilation addition reaction inhibitor.
[6] A method of curing the curable liquid silicone composition of any one of [1] to [5], comprising the steps of irradiating UV to the composition at room temperature and then exposing the composition to air for a predetermined time.

### ADVANTAGEOUS EFFECTS OF INVENTION

In the curable liquid silicone composition, cure reaction takes place with the aid of two platinum base catalysts, a platinum base catalyst adapted to be activated with UV irradiation to function as a hydrosilation addition reaction catalyst and an aerobic platinum base catalyst mixture adapted to be activated by contact with water and/or oxygen, specifically water (moisture) and/or oxygen in the ambient air to function as a hydrosilation addition reaction catalyst. The curable liquid silicone composition comprising the platinum base catalyst and the platinum base catalyst mixture has satisfactory long-term one-pack storage stability in a light-shielded, closed container during storage and transportation at refrigerating to room temperature. On use, the platinum base catalyst and the platinum base catalyst mixture in the composition are activated without heating, i.e., at room temperature by irradiating UV, and bringing into contact with water and/or oxygen, specifically water (or moisture) and/or oxygen in the ambient air, so that hydrosilation addition reaction takes place. Thus, not only the UV-irradiated section, but also the shadow section can be rapidly cured. Accordingly, the curable liquid silicone composition (i.e., curable liquid silicone rubber or gel composition) contributes to the manufacture of various parts and articles complying with the energy saving and SDGs.

### DESCRIPTION OF EMBODIMENTS

Now the invention is described in detail.

### [Curable liquid silicone composition]

The invention provides a curable liquid silicone composition (i.e., curable liquid silicone rubber or gel composition) comprising components (A) to (D) as described below and optionally, other components.

### [(A) Alkenyl-containing diorganopolysiloxane]

Component (A) is an alkenyl-containing diorganopolysiloxane, i.e., a linear or branched diorganopolysiloxane having at least one alkenyl group, preferably 1 to 20 alkenyl groups per molecule. It functions as a main component or base polymer in the curable liquid silicone composition. Most often, it is a linear diorganopolysiloxane whose backbone is basically composed of repeating diorganosiloxane units and which is blocked at both ends of the molecular chain with triorganosiloxy groups. Also acceptable is a branched diorganopolysiloxane containing a branched structure in some of the siloxane structures of which the molecular chain is composed.

The alkenyl-containing diorganopolysiloxane as component (A) contains at least one alkenyl group, typically 1 to 50, preferably 1 to 20, more preferably 2 to 10, most preferably 2 alkenyl groups per molecule. Suitable alkenyl groups include groups of about 2 to 8 carbon atoms, for example, vinyl, allyl, propenyl, isopropenyl, butenyl, hexenyl, and cyclohexenyl. The alkenyl group may be bonded to the silicon atom at the end of the molecular chain or a silicon atom at a non-end or intermediate position of the molecular chain. A diorganopolysiloxane containing an alkenyl group bonded to the silicon atom at the end (more preferably both ends) of the molecular chain is preferred. In this case, the alkenyl groups may be bonded only at the end (or both ends) of the molecular chain or bonded at the end (or both ends) of the molecular chain and non-end or intermediate positions of the molecular chain.

Examples of the alkenyl-containing diorganopolysiloxane include linear diorganopolysiloxanes having the general formula (1).

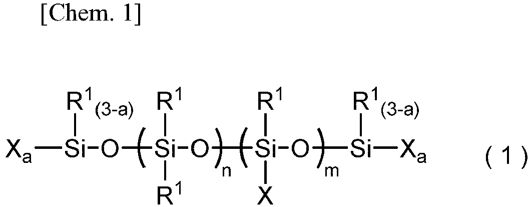

Herein R¹ is independently a substituted or unsubstituted monovalent hydrocarbon group free of aliphatic unsaturation. X is an alkenyl group, at least one being contained per molecule. The subscript n is an integer of at least 0, m is an integer of at least 0, "a" is an integer of 0 to 3 independently for each silicon atom to which X or R¹ is attached, and at least one of "a" at both ends and m is an integer of at least 1.

Examples of the substituted or unsubstituted monovalent hydrocarbon groups free of aliphatic unsaturation, represented by R¹, include groups of 1 to 12 carbon atoms, preferably 1 to 10 carbon atoms, more preferably 1 to 6 carbon atoms, specifically alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl groups such as cyclopentyl, cyclohexyl and cycloheptyl; aryl groups such as phenyl, tolyl, xylyl, naphthyl and biphenylyl; aralkyl groups such as benzyl, phenylethyl, phenylpropyl and methylbenzyl; and substituted ones of the foregoing groups in which some or all of the carbon-bonded hydrogen atoms are substituted by halogen atoms (e.g., fluoro, bromo and chloro), cyano groups or the like, such as chloromethyl, 2-bromoethyl, 3-chloropropyl, 3,3,3-trifluoropropyl, chlorophenyl, fluorophenyl, cyanoethyl and 3,3,4,4,5,5,6,6,6-nonafluorohexyl. Of these, preferred are substituted or unsubstituted alkyl groups of 1 to 3 carbon atoms such as methyl, ethyl, propyl, chloromethyl, bromoethyl, 3,3,3-trifluoropropyl and cyanoethyl, and substituted or unsubstituted phenyl groups such as phenyl, chlorophenyl, and fluorophenyl. R¹ is more preferably methyl or phenyl.

Examples of the alkenyl group X include groups of 2 to 8 carbon atoms, such as vinyl, allyl, propenyl, isopropenyl, butenyl, hexenyl, and cyclohexenyl. Inter alia, lower alkenyl groups such as vinyl and allyl are preferred.

In formula (1), n is an integer of at least 0, preferably an integer of 10 to 2,000, more preferably an integer of 50 to 1,200; m is an integer of at least 0, preferably an integer of 0 to 40, more preferably an integer of 0 to 20; and n and m are preferably integers satisfying 10 ≤ n+m ≤ 2,000, more preferably 50 ≤ n+m ≤ 1,200, and 0 ≤ m/(n+m) ≤ 0.2. Herein, individual units enclosed in parentheses with n and m may be randomly arranged.

In formula (1), "a" is an integer of 0 to 3, preferably 1 to 3, independently for each silicon atom to which X or R¹ is attached.

The alkenyl-containing diorganopolysiloxane should preferably have a viscosity at 23°C of about 10 to 1,000,000 mPa·s, more preferably about 100 to 500,000 mPa·s.

The repetition number of diorganosiloxane units in the molecule (or degree of polymerization) is typically determined as a number average molecular weight (or number average degree of polymerization) versus polystyrene standards by gel permeation chromatography (GPC) using toluene as developing solvent. The viscosity is typically measured at 23°C by a rotational viscometer, e.g., BL, BH, BS, cone-plate type viscometer, or rheometer.

The alkenyl-containing diorganopolysiloxane as component (A) may be used alone or in admixture. It is recommended to reduce the contents of oxygen and water in the alkenyl-containing diorganopolysiloxane as component (A) prior to blending in the composition, in order to prevent the platinum base catalyst mixture as component (D) from losing its function. This may be achieved by such means as purging with an inert gas such as nitrogen gas, heating, vacuum evacuation, or combination thereof.

### [(B) Organohydrogenpolysiloxane]

Component (B) is an organohydrogenpolysiloxane of linear, cyclic, branched or 3D network structure (resin structure) having at least two silicon-bonded hydrogen atoms (i.e., SiH groups) per molecule, typically 2 to about 200, preferably 3 to about 100 silicon-bonded hydrogen atoms (i.e., SiH groups) per molecule. It functions as a curing or crosslinking agent in the curable liquid silicone composition.

Typical of the organohydrogenpolysiloxane is an organohydrogenpolysiloxane having the average compositional formula (2):

H_{b}R²_{c}SiO_{(4-b-c)/2} (2)

wherein R² is independently a substituted or unsubstituted monovalent hydrocarbon group free of aliphatic unsaturation, b and c are numbers in the range: 0.001 ≤ b ≤ 1.2, 0.8 ≤ c ≤ 2, and 0.8 ≤ b+c ≤ 3, preferably 0.05 ≤ b ≤ 1, 1.5 ≤ c ≤ 2, and 1.8 ≤ b+c ≤ 2.7.

Examples of the substituted or unsubstituted monovalent hydrocarbon groups free of aliphatic unsaturation, represented by R², are as exemplified above for R¹ in formula (1), specifically hydrocarbon groups of 1 to 12 carbon atoms, preferably 1 to 10 carbon atoms, more preferably 1 to 7 carbon atoms. Lower alkyl groups of 1 to 3 carbon atoms such as methyl, phenyl, and 3,3,3-trifluoropropyl are especially preferred.

Preferred as component (B) is an organohydrogenpolysiloxane which contains 2 to about 300, preferably 2 to about 150, more preferably 2 to about 100 silicon atoms per molecule and is liquid at room temperature (23°C±15°C, the same holds true, hereinafter). The silicon-bonded hydrogen atoms (or SiH groups) may be positioned either at the end of the molecular chain or at an intermediate or non-end position of the molecular chain or both.

Examples of the organohydrogenpolysiloxane include methylhydrogencyclosiloxane oligomers such as 1,1,3,3-tetramethyldisiloxane, 1,1,3,3,5,5-hexamethyltrisiloxane, 1,3,5,7-tetramethyltetracyclosiloxane, and 1,3,5,7,9-pentamethylpentacyclosiloxane; tris(dimethylhydrogensiloxy)methylsilane, tris(dimethylhydrogensiloxy)phenylsilane, molecular both end trimethylsiloxy-blocked methylhydrogenpolysiloxane, molecular both end trimethylsiloxy-blocked dimethylsiloxane/methylhydrogensiloxane copolymers, molecular both end trimethylsiloxy-blocked diphenylsiloxane/methylhydrogensiloxane copolymers, molecular both end trimethylsiloxy-blocked methylphenylsiloxane/methylhydrogensiloxane copolymers, molecular both end trimethylsiloxy-blocked dimethylsiloxane/diphenylsiloxane/methylhydrogensiloxane copolymers, molecular both end dimethylhydrogensiloxy-blocked dimethylpolysiloxane, molecular both end dimethylhydrogensiloxy-blocked methylhydrogenpolysiloxane, molecular both end dimethylhydrogensiloxy-blocked dimethylsiloxane/methylhydrogensiloxane copolymers, molecular both end dimethylhydrogensiloxy-blocked diphenylsiloxane/methylhydrogensiloxane copolymers, molecular both end dimethylhydrogensiloxy-blocked methylphenylsiloxane/methylhydrogensiloxane copolymers, molecular both end dimethylhydrogensiloxy-blocked dimethylsiloxane/diphenylsiloxane/methylhydrogensiloxane copolymers, silicone resins of 3D network structure composed of dimethylhydrogensiloxy units and SiO_{4/2} units, and optionally containing trimethylsiloxy units, dimethylsiloxane units, methylhydrogensiloxane units, hydrogensilsesquioxane units and/or methylsilsesquioxane units, and substituted forms of the above-exemplified compounds in which some or all methyl groups are substituted by other alkyl groups or phenyl groups. It is noted that component (B) may be identical with the organosilicon compound in component (D) to be described later.

The organohydrogenpolysiloxane used herein may be obtained by any well-known methods. For example, it may be obtained from (co)hydrolytic condensation of at least one chlorosilane selected from the general formulae: R²SiHCl₂ and R²₂SiHCl wherein R² is as defined above, or from cohydrolytic condensation of a mixture of the foregoing chlorosilane and at least one chlorosilane selected from the general formulae: R²₃SiCl and R²₂SiCl₂ wherein R² is as defined above. The organohydrogenpolysiloxane may also be one obtained from equilibration of the polysiloxane obtained from the (co)hydrolytic condensation.

From the aspect of obtaining a satisfactory silicone rubber or gel after curing, the amount of the organohydrogenpolysiloxane blended is such as to provide 0.5 to 4 moles, preferably 0.8 to 2.5 moles of silicon-bonded hydrogen (i.e., SiH group) in the organohydrogenpolysiloxane as component (B) per mole of alkenyl group in the alkenyl-containing diorganopolysiloxane as component (A).

The organohydrogenpolysiloxane as component (B) may be used alone or in admixture. It is recommended to reduce the contents of oxygen and water in the organohydrogenpolysiloxane as component (B) prior to blending in the composition, in order to prevent the platinum base catalyst mixture as component (D) from losing its function. This may be achieved by such means as purging with an inert gas such as nitrogen gas, heating, vacuum evacuation, or combination thereof.

### [(C) Platinum base catalyst adapted to be activated with UV]

Component (C) in the curable liquid silicone composition is a platinum base catalyst adapted to be activated with light having a wavelength of 200 to 500 nm, preferably UV having a wavelength of 200 to 400 nm, that is, a catalyst which is inert under light-shielded conditions, but is converted to a normally active platinum base catalyst (hydrosilation addition reaction catalyst) by irradiating light having a wavelength of 200 to 500 nm, preferably UV having a wavelength of 200 to 400 nm thereto, the catalyst being capable of promoting hydrosilation addition reaction of alkenyl groups in component (A) with silicon-bonded hydrogen atoms in component (B).

Examples of the platinum base catalyst adapted to be activated with UV as component (C) include platinum acetylacetonato complexes and platinum cyclopentadienyl complexes as described in USP 4,510,094 and USP 4,530,879.

Examples of component (C) include (η⁵-cyclopentadienyl) tri-aliphatic platinum compounds. Inter alia, trimethyl(cyclopentadienyl)platinum complex and trimethyl(methylcyclopentadienyl)platinum complex are preferred.

Also included are complexes of bis(β-diketonato)platinum compounds, with bis(acetylacetonato)platinum complex being preferred.

The amount of the platinum base catalyst as component (C) is such as to provide 0.1 to 1,000 ppm, preferably 0.1 to 500 ppm, more preferably 0.1 to 50 ppm by weight of platinum atom in component (C) based on the total weight of components (A) and (B). If the amount of component (C) is less than the range, the cure reaction rate is insufficient or the composition remains uncured under the influence of the surrounding cure inhibition factors. If the amount of component (C) exceeds the range, a sufficient storage stability is lost.

Component (C) may be used alone or in admixture.

On use of component (C), if it is a solid catalyst, it may be used in solid form. For obtaining a more uniform cured product, the catalyst is preferably dissolved in a suitable solvent such as toluene, xylene, ethyl acetate or 2-(2-butoxyethoxy)ethyl acetate prior to use.

### [(D) Platinum base catalyst mixture adapted to be activated with water and/or oxygen]

The platinum base catalyst mixture adapted to be activated with water and/or oxygen as component (D) is a platinum base catalyst mixture adapted to be activated in contact with water and/or oxygen, specifically water (moisture) and/or oxygen in the ambient air to function as a hydrosilation addition reaction catalyst. It is an aerobic platinum base catalyst mixture consisting of a reaction mixture of a platinum-alkenyl-containing organosiloxane complex with an organosilicon compound having at least one silicon-bonded hydrogen atom (or SiH group) per molecule in an amount to provide a molar excess of silicon-bonded hydrogen (or SiH group) relative to the alkenyl group in the platinum-alkenyl-containing organosiloxane complex.

It is noted that the term "aerobic" refers to the nature (aerobic reaction type) of a catalyst that although the catalyst has a low catalytic activity as a hydrosilation addition reaction catalyst in a closed state having a low oxygen concentration (substantially oxygen-free) and a low water content where contact with water (moisture) and oxygen is shut off, it is activated as a hydrosilation addition reaction catalyst by contact with water (moisture) and oxygen in the ambient air. As used herein, the "ambient air" is air having an oxygen concentration of 21% by volume and a humidity of more than RH 5% to RH 100%. In conjunction with the closed state, the low oxygen concentration is an oxygen concentration of up to 0.1 % by volume and the low water content is a humidity of RH 5% or lower. The "closed state" refers to the state that any contact with the ambient air is shut off (that is, any contact with water (moisture) and oxygen is shut off, and the closed container is a container for establishing the closed state.

In the platinum base catalyst mixture as component (D), the platinum-alkenyl-containing organosiloxane complex is preferably selected from complexes of platinum, platinum chloride, chloroplatinic acid, and chloroplatinic acid salts with vinyl-containing siloxanes (for example, organodisiloxane compounds having 2 alkenyl groups per molecule such as 1,3-divinyl-1,1,3,3-tetramethyldisiloxane). In the case of the complex of chloroplatinic acid (H₂PtCl₆) with 1,3-divinyl-1,1,3,3-tetramethyldisiloxane, for example, 3 molecules of 1,3-divinyl-1,1,3,3-tetramethyldisiloxane which is a bidentate ligand coordinate per molecule of chloroplatinic acid.

The platinum-alkenyl-containing organosiloxane complex is preferably used as a solution in such a solvent as toluene, lower alcohols, higher alcohols, or silicones. In this embodiment, the solution preferably has a concentration or content of 0.05 to 5% by weight of platinum atom.

In the platinum base catalyst mixture as component (D), the organosilicon compound having at least one silicon-bonded hydrogen atom (or SiH group) per molecule is preferably selected from organohydrogensilanes and organohydrogensiloxane oligomers having at least one SiH group, typically 1 to 10, preferably 1 to 5 SiH groups per molecule. From the aspects of handling and safety, the organohydrogensiloxane oligomer is more preferred. The organohydrogensiloxane oligomer may have a linear or branched molecular structure and contains preferably 2 to 40, more preferably 2 to 10, even more preferably 2 to 5 silicon atoms per molecule.

Examples of the organohydrogensilane and organohydrogensiloxane oligomer include trialkoxy(hydrogen)silanes, alkyldialkoxy(hydrogen)silanes, dialkylalkoxy(hydrogen)silanes, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane. These compounds may be used alone or in admixture.

During preparation of the platinum base catalyst mixture, the alkenyl group in the platinum-alkenyl-containing organosiloxane complex reacts with the SiH group originating from the organosilicon compound which is added in an amount to provide a molar excess of SiH group relative to the alkenyl group (specifically more than 1 mole, preferably about 1.1 to 30 moles, more preferably about 1.5 to 25 moles, even more preferably about 5 to 25 moles of SiH group per mole of alkenyl group) in a water and oxygen-free atmosphere, for example, a closed state where any contact with water (moisture) and oxygen is shut off, having a low oxygen concentration (substantially oxygen-free) and a low water content. Then the platinum base catalyst mixture as component (D) is a reaction mixture in which all the alkenyl groups have changed to alkylene groups through hydrosilation addition reaction (the alkenyl groups have substantially vanished), and some SiH groups originating from the excess of the organosilicon compound remain.

The method of preparing the platinum base catalyst mixture as component (D) involves mixing the platinum-alkenyl-containing organosiloxane complex with the organosilicon compound having at least one silicon-bonded hydrogen atom (SiH group) per molecule in such a ratio as to provide a molar excess of SiH group in the organosilicon compound relative to the alkenyl group in the platinum-alkenyl-containing organosiloxane complex in a water and oxygen-free atmosphere to form a reaction mixture.

The mixing ratio which provides a molar excess of SiH group in the organosilicon compound having at least one silicon-bonded hydrogen atom (SiH group) per molecule relative to the alkenyl group in the platinum-alkenyl-containing organosiloxane complex means that the platinum-alkenyl-containing organosiloxane complex and the organosilicon compound are mixed in such a relationship that more than 1 mole, preferably about 1.1 to 30 moles, more preferably about 1.5 to 25 moles, even more preferably about 5 to 25 moles of SiH group in the organosilicon compound is available per mole of alkenyl group in the complex.

The mixing technique is not particularly limited as long as the platinum-alkenyl-containing organosiloxane complex and the organosilicon compound having at least one silicon-bonded hydrogen atom (SiH group) per molecule are uniformly mixed. For example, a glass reactor such as glass flask or a stainless steel reactor is preferably used.

The atmosphere in the mixing step should be free of water and oxygen and is preferably an inert gas atmosphere, typically nitrogen or reduced pressure (or vacuum). Since there is no need for heating, the temperature may be room temperature. The mixing time or reaction time may be set such that the platinum-alkenyl-containing organosiloxane complex and the organosilicon compound having at least one silicon-bonded hydrogen atom (SiH group) per molecule are uniformly mixed. For example, the mixing time is preferably 0.5 to 100 hours, especially 1 to 24 hours.

In the platinum base catalyst mixture as component (D), when the organosilicon compound having at least one silicon-bonded hydrogen atom (SiH group) per molecule is an organohydrogensiloxane oligomer having per molecule at least 2 hydrogen atoms (sometimes referred to as adjacent SiH groups) each bonded to one of silicon atoms (sometimes referred to as adjacent silicon atoms) which are adjacent to each other via an ether oxygen atom to form a siloxane linkage (Si-O-Si), for example, when the organosilicon compound is 1,1,3,3-tetramethyldisiloxane, 1,1,1,3,5,7,7,7-octamethyltetrasiloxane, 1,3,5,7-tetramethylcyclotetrasiloxane, or 1,3,5,7,9-pentamethylcyclopentasiloxane, the reaction mixture obtained by uniformly mixing the organohydrogensiloxane oligomer having at least 2 adjacent SiH groups with the platinum-alkenyl-containing organosiloxane complex in a water and oxygen-free atmosphere is further brought into contact with water and/or oxygen by such means as mixing in the ambient air. Alternatively, the reaction mixture is preferably obtained by mixing the organohydrogensiloxane oligomer having at least 2 adjacent SiH groups and the platinum-alkenyl-containing organosiloxane complex in such a ratio as to provide a molar excess of SiH group in the organohydrogensiloxane oligomer relative to alkenyl group in the platinum-alkenyl-containing organosiloxane complex while keeping them in contact with water and/or oxygen. Then a curable liquid silicone composition containing the mixture as a hydrosilation addition reaction catalyst is further improved in long-term one-pack storage stability in the closed state without detracting from curability upon contact with water (moisture) and/or oxygen in air, as long as the system or composition during storage is substantially free of water and oxygen.

When the organosilicon compound having at least one silicon-bonded hydrogen atom (SiH group) per molecule is an organohydrogensiloxane oligomer having per molecule at least 2 hydrogen atoms (adjacent SiH groups) each bonded to one of silicon atoms which are adjacent to each other via an ether oxygen atom to form a siloxane linkage (Si-O-Si), the preparation method preferably involves the step of further mixing the reaction mixture, which has been prepared by mixing the organosilicon compound and the platinum-organosiloxane complex in a water and oxygen-free atmosphere, in contact with water and/or oxygen. This step is to bring the reaction mixture in contact with water and/or oxygen by such means as mixing in air. For example, the time of mixing in air is preferably 0.5 to 100 hours, especially 1 to 12 hours. Thereafter, a closed container is filled with the platinum base catalyst mixture.

When the organosilicon compound having at least one silicon-bonded hydrogen atom (SiH group) per molecule is an organohydrogensiloxane oligomer having per molecule at least 2 hydrogen atoms (adjacent SiH groups) each bonded to one of silicon atoms which are adjacent to each other via an ether oxygen atom to form a siloxane linkage (Si-O-Si), another preparation method involves the step of mixing the platinum-alkenyl-containing organosiloxane complex and the organohydrogensiloxane oligomer in such a ratio as to provide a molar excess of SiH group in the organohydrogensiloxane oligomer relative to alkenyl group in the platinum-alkenyl-containing organosiloxane complex while keeping them in contact with water and/or oxygen. In this preparation method, the components are brought in contact with water and/or oxygen by such means as mixing in air. For example, the time of mixing in air is preferably 0.5 to 100 hours, especially 1 to 12 hours. Thereafter, a closed container is filled with the platinum base catalyst mixture.

Component (D) may be used alone or in admixture.

The amount of the platinum base catalyst mixture as component (D) is set so as to provide 0.1 to 1,000 ppm, preferably 0.5 to 200 ppm by weight of platinum atom in component (D) based on the total weight of components (A) and (B). If the amount of component (D) is less than the range, the curable liquid silicone composition is short cured under the influence of the catalyst inhibition factors. If the amount exceeds the range, storage stability is lost.

Notably, since the amount of component (D) used is a so-called catalytic amount, the molar excess of SiH group remaining in component (D) is a minor or negligible amount and does not substantially affect the molar ratio of SiH group in component (B) to alkenyl group in component (A).

### [Other components]

Besides the foregoing components (A) to (D), any of various optional components as described below can be added to the curable liquid silicone composition as long as the benefits of the invention are not impaired.

### [(E) Dehydrating agent]

In the curable liquid silicone composition, component (E), a dehydrating agent may be blended as an optional component for removing water in the composition. Blending the dehydrating agent (E) provides for better storage stability.

As mentioned above, the platinum base catalyst mixture as component (D), which is one of the essential features of the invention, has the nature (aerobic reaction type) that although the catalyst mixture has a low catalytic activity in an environment having a low oxygen concentration (substantially oxygen-free) and a low water content where contact with water (moisture) and oxygen is shut off, its catalytic function is activated as a hydrosilation addition reaction catalyst by contact with water (moisture) and oxygen in the ambient air. It is then confirmed that the curable liquid silicone composition is improved in one-pack storage stability by reducing the water content of each component and the water content of the composition after mixing. For establishing one-pack storage stability, it is useful to introduce a means for consuming, within the composition, water originating from components in the composition in the closed container during storage and a minor amount of water entering from without the container (the consuming means is, for example, dehydrating agent (E)).

The dehydrating agent as component (E) may be either an inorganic compound or an organic compound as long as the functions of components (A) to (D) are not impaired. Some dehydrating agents form by-products of dehydrating reaction, which can cause foam generation. Many dehydrating agents cause decomposition of the organohydrogenpolysiloxane as component (B) or the organosilicon compound having at least one silicon-bonded hydrogen atom (SiH group) per molecule as component (D), or incur a lowering of the catalytic activity of the platinum base catalyst mixture as component (D).

For these reasons, the dehydrating agent as component (E) is preferably selected from silylketenes (inclusive of silyl ketene acetals), silyl enol esters, and α-silyl esters which enable effective dehydration within the system. During dehydration, these dehydrating agents form by-products which do not impair the functions of components (A) to (D) and are dissolved in the curable liquid silicone composition. Then a stable curable liquid silicone composition is obtained. Inter alia, the silylketenes (inclusive of silyl ketene acetals) and α-silyl esters allow dehydrating reaction to take place under non-basic conditions. They do not cause decomposition of the organohydrogenpolysiloxane as component (B) or the organosilicon compound having at least one silicon-bonded hydrogen atom (SiH group) per molecule in component (D), or incur a lowering of the catalytic activity of the platinum base catalyst mixture as component (D).

Examples of the silylketene (inclusive of silyl ketene acetal) include 1-methoxy-2-methyl-1-(trimethylsiloxy)propene, dimethyl ketene trimethylsilyl acetal, and tert-butoxy-1-(trimethylsiloxy)propene.

Examples of the α-silyl ester include ethyl 2-(trimethoxysilyl)propionate (ECMS) and octyl 2-(methyldimethoxysilyl)propionate (OCMS-2).

The dehydrating agent as component (E) may be previously added to each component, or added to the composition during or after preparation. The amount of the dehydrating agent added is preferably 0.01 to 5% by weight, more preferably 0.1 to 2% by weight of the overall composition. A too large amount of component (E) may have an adverse impact on the change of physical properties of the cured product in a heating test.

A catalyst may be added for promoting reaction of component (E) with water. Suitable catalysts include titanates such as tetra(isopropyl) titanate (TPT), tetrabutyl titanate (TBT), and tetra(2-ethylhexyl) titanate (TOT), titanium chelate compounds such as titanium diisopropoxybis(ethyl acetoacetate) and titanium tetraacetylacetonate, and tin compounds such as dibutyltin dimethoxide and dibutyltin dilaurate. The amount of the catalyst added is preferably 0.001 to 2% by weight, more preferably 0.01 to 1% by weight of the overall composition.

### [(F) Hydrosilation addition reaction inhibitor]

It is also useful to blend component (F) or a hydrosilation addition reaction inhibitor as an optional component in the curable liquid silicone composition, if necessary, for the purpose of enhancing one-pack storage stability.

As mentioned above, the platinum base catalysts as components (D) and (D) in the inventive composition have the nature that their catalytic function is activated by UV irradiation or contact with water and/or oxygen. In some cases, the platinum base catalysts as components (D) and (D) can be, in part, activated as hydrosilation addition reaction catalyst by a minor dose of UV to which the composition is exposed during its preparation, or water from various components, water entering in the steps of preparing the composition and filling a container with the composition, and UV, oxygen and water entering from without the light-shielded, closed container. The partially activated catalysts can cause a substantial decline of one-pack storage stability of the composition. Such a decline of one-pack storage stability may be minimized by auxiliary blending of the hydrosilation addition reaction inhibitor as component (F).

Examples of the hydrosilation addition reaction inhibitor include acetylene alcohols such as 1-ethynylcyclohexanol and 3-methyltridec-1-yn-3-ol (EMDC); silane or siloxane-modified acetylene alcohols such as dimethylbis(1,1-dimethyl-2-propinyloxy)silane (PLR-22) and 3-(trimethylsilyloxy)-3-methyl-1-butyne (PLR-31); phosphorous acid compounds, especially phosphite esters such as tri(isopropyl) phosphite, tris(di-tert-butylphenyl) phosphite, triphenyl phosphite and tris(2-ethylhexyl) phosphite; ethylenediamines such as tetramethylethylenediamine; benzotriazoles such as benzotriazole and 5-methyl-1H- benzotriazole, and mixtures thereof. Inter alia, the phosphorous acid compounds, especially phosphite esters such as tri(isopropyl) phosphite and tris(di-tert-butylphenyl) phosphite are preferred because a curable liquid silicone composition having satisfactory one-pack storage stability in a light-shielded, closed state is available.

The amount of the hydrosilation addition reaction inhibitor as component (F) may be any arbitrary amount in accordance with its ability as long as the cure of the inventive composition is not affected. Desirably, it is an addition amount in the range that is not detrimental to the cure through secondary hydrosilation addition reaction taking place with the aid of the platinum base catalyst mixture as component (D) adapted to be activated by exposure to air (water and/or oxygen) after UV irradiation. In the case of phosphorous acid compounds, especially phosphite esters, the addition amount may be a minor amount, specifically less than 1 mole, especially 0 to 0.75 mole per mole of platinum atom in the composition. When blended, the amount of the inhibitor is preferably at least 0.1 mole per mole of platinum atom in the composition. If the amount of component (F) used is too large, both the platinum base catalysts, component (C) which has been activated with UV during use and component (D) which has been activated with water and/or oxygen during use are deactivated. Then the composition becomes less curable upon opening to air.

Besides the foregoing optional components including dehydrating agent (E) and hydrosilation addition reaction inhibitor (F), additives including inorganic fillers, tackifiers, pigment pastes, and reinforcing silicone resins may be blended in the curable liquid silicone composition as other optional components, if necessary.

For the curable liquid silicone composition, better one-pack storage stability is achieved by using a tightly closed container capable of shielding UV and shutting off or reducing the entry of oxygen and water, especially water (moisture) and oxygen in air and storing the composition in the container. Then the composition can be distributed and marketed as a curable liquid silicone composition of one pack type.

Further, the curable liquid silicone composition can be cured into a silicone rubber or gel cured product by opening the light-shielded, closed container, irradiating UV at room temperature for curing a UV-irradiated section of the composition, and then exposing to the ambient air to bring the composition in contact with water (moisture) and/or oxygen in air at room temperature, whereby not only the surface in contact with air, but also the UV non-irradiated section (shaded section) and the shadow section where UV does not reach are rapidly cured.

### [Method of curing curable liquid silicone composition]

The method of curing the curable liquid silicone composition includes the following steps:
step (1) of irradiating UV to the curable liquid silicone composition at room temperature, and
step (2) of then exposing the composition to air at room temperature for a predetermined time.

### [UV irradiating step]

The curing method includes the first step of irradiating UV to the curable liquid silicone composition at room temperature (23°C±15°C), desirably irradiating UV of 200 to 500 nm at room temperature. The UV irradiation causes to activate the platinum base catalyst (C) in the UV-irradiated section to function as a hydrosilation addition reaction catalyst to promote hydrosilation addition reaction whereby the UV-irradiated section is cured.

The lamp for emitting UV is not particularly limited as long as it can deliver UV of wavelength 200 to 500 nm. Exemplary are low-pressure mercury lamps, medium-pressure mercury lamps, high-pressure mercury lamps, xenon lamps, metal halide lamps, and UV-emitting LED lamps. The dose of UV irradiation varies with the type and amount of the photo-activation platinum complex (platinum base catalyst as component (C)) used as long as the dose is sufficient to activate the photo-activation platinum complex. Preferably, UV is irradiated under conditions: intensity 10 to 1,000 mW/cm², especially 20 to 400 mW/cm² and about 0.1 second to 5 minutes, especially about 0.5 second to 1 minute.

### [Air exposure step]

The curing method includes, after the first step of UV irradiation, the second step of exposing the composition to air at room temperature for a predetermined time. After the curable liquid silicone composition is cured through hydrosilation addition reaction promoted by component (C) which is activated by irradiating UV at room temperature (23°C±15°C), the composition is exposed to air at room temperature for a predetermined time, typically at least 0.5 hour, preferably 1 to 48 hours, more preferably 2 to 24 hours. Upon air exposure, the platinum base catalyst mixture as component (D) is activated to function as a hydrosilation addition reaction catalyst whereby the hydrosilation addition reaction is further promoted. This enables to cure even the section shaded from UV irradiation and the shadow section where UV does not reach.

The cured product of the curable liquid silicone composition, which is a silicone rubber or gel, has satisfactory heat resistance and electric insulating properties and is applicable to parts of vehicles, aircraft, and electric appliances.

### EXAMPLES

Examples and Comparative Examples are given below for illustrating the invention, but the invention is not limited thereto. The viscosity is measured at 23°C by a rotational viscometer. The degree of polymerization (DOP) is a number average DOP measured versus polystyrene standards by GPC using toluene as developing solvent. Me stands for methyl, Vi stands for vinyl, and RT is room temperature of 23°C.

### [Examples 1 to 4 and Comparative Examples 1 to 3]

A curable liquid silicone composition was prepared by the following procedure.

### (Preparation of curable liquid silicone composition)

Each composition was prepared in a brown glass bottle by mixing the amounts of components shown in Table 2 in nitrogen atmosphere at RT (23°C) until uniform, shielding the bottle from light and tightly closing the bottle. The molar ratio of SiH group in component (B) to vinyl group in component (A) was 2.2.

The components were mixed while adding them in the order of (A) alkenyl-containing diorganopolysiloxane, (B) organohydrogenpolysiloxane, (E) dehydrating agent, (F) hydrosilation addition reaction inhibitor, (C) platinum base catalyst adapted to be activated with UV, and (D) platinum base catalyst mixture adapted to be activated with water and/or oxygen. When a certain component was not added, the addition order of that component was omitted and the addition of the subsequent components was continued.

In order to prepare the composition in a reproducible manner, each of (A) alkenyl-containing diorganopolysiloxane and (B) organohydrogenpolysiloxane was previously dried by vacuum deaeration at 120°C in a glass flask, prior to addition. The composition mixing and container filling steps were carried out in nitrogen atmosphere.

The components are identified below.

### (A) Alkenyl-containing diorganopolysiloxane

Vinyl-containing linear diorganopolysiloxane having a viscosity at 23°C of 5,000 mPa s, represented by the following average formula:

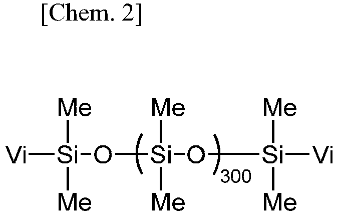

### (B) Organohydrogenpolysiloxane

Linear organohydrogenpolysiloxane represented by the following average formula:

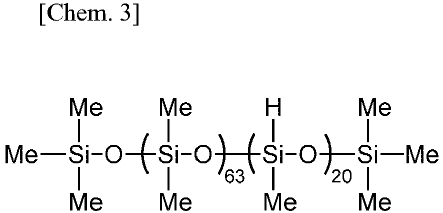

### (C) UV-activatable platinum base catalyst

(C-1) toluene solution of trimethyl(methylcyclopentadienyl)platinum complex (Pt content 0.5 wt%)
(C-2) 2-(2-butoxyethoxy)ethyl acetate solution of bisacetylacetonatoplatinum complex (Pt content 0.5 wt%)

### (D) Aerobic platinum base catalyst mixture

Aerobic platinum base catalyst mixtures (D-1) and (D-2) were prepared as follows.

Aerobic platinum base catalyst mixture (D-1) was prepared in nitrogen atmosphere at RT (23°C) by mixing 8.0 g of toluene solution of platinum alkenyl-containing organosiloxane complex (Pt content 0.5 wt%) and 2.0 g of 1,1,3,3-tetramethyldisiloxane in a 25-g glass bottle uniformly over 12 hours for reaction and closing the bottle. By further opening the lid of the bottle in air at RT (23°C), mixing the mixture uniformly for 2 hours while keeping it in contact with air, and then closing the bottle, aerobic platinum base catalyst mixture (D-2) was prepared.

**[Table 1]**

| Platinum base catalyst mixture | (D-1) | (D-2) |
|---|---|---|
| platinum alkenyl-containing organosiloxane complex | 8.0 g | 8.0 g |
| 1,1,3,3-tetramethyldisiloxane | 2.0 g | 2.0 g |
| (SiH_{c-b})/(Vi_{c-a}) molar ratio | 21.4 | 21.4 |
| Mixing in contact with air | no | yes |
| Mixture appearance | dark brown | green transparent |

### (E) Dehydrating agent

ethyl 2-(trimethoxysilyl)propionate (ECMS) (α-silyl ester)

### (E') Catalyst for promoting reaction of component (E) with water

tetra(isopropyl) titanate (TPT)

### (F) Hydrosilation addition reaction inhibitor

0.31 wt% toluene solution of tris(di-tert-butylphenyl) phosphite having the formula:

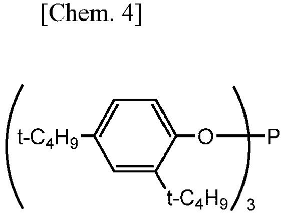

The curable liquid silicone compositions thus prepared were evaluated for the outer appearance of a cured product, one-pack storage stability in a light-shielded closed environment, cure upon UV irradiation after storage, and shadow-section cure, as follows.

### [Outer appearance of cured product]

The outer appearance of a cured product was evaluated by visual observation. All the cured products of Examples and Comparative Examples looked colorless transparent to pale yellow transparent.

### [One-pack storage stability (light-shielded, closed)]

The one-pack storage stability of a curable liquid silicone composition was evaluated by filling a brown glass bottle with the composition in nitrogen atmosphere, closing the bottle, allowing the bottle to stand in air at RT, and observing the thickening (or viscosity buildup) and gelling behaviors of the composition. The thickening and gelling behaviors of the composition were observed by tilting the brown glass bottle, and observing how the composition in the bottle flowed (fluidity) by following the tilt. The composition was judged as having thickened or gelled when the fluidity was inferior to that immediately after bottle closing. Also, when the brown glass bottle filled with the curable liquid silicone composition was held in air at RT, the composition was observed first for 5 minutes and then every day. The time (minutes or days) taken until the composition thickened or gelled was determined.

For the evaluation of cure upon UV irradiation and shadow-section cure (UV non-irradiated section), the curable liquid silicone composition stored in the brown glass bottle, i.e., in the closed state for 1 day was used.

### [Cure upon UV irradiation]

The curable liquid silicone composition was evaluated for cure upon UV irradiation by casting 25 g of each of the compositions of Examples and Comparative Examples in an aluminum dish (diameter 60 mm by depth 1 mm), irradiating UV of wavelength 365 nm from a UV-LED lamp to the composition at 23°C under conditions: intensity 100 mW/cm² and dose 3,000 mJ/cm², allowing the composition to stand in air at 23°C for curing, and observing the cured state.

On evaluation, the cured product which was a measurable rubbery sample was measured for hardness according to JIS K 6249 (Durometer type A). The cured product which was unmeasurable was visually observed. Observation was made after 10 minutes, 1 hour, 6 hours, and 24 hours from UV irradiation.

### [Shadow-section cure]

The curable liquid silicone composition was evaluated for shadow-section cure by setting an aluminum plate (25 mm by 50 mm) having spacers (1 mm) at both ends in an aluminum dish (diameter 60 mm by depth 1 mm), casting 25 g of each of the compositions of Examples and Comparative Examples into the setup to form a sample (plural samples were prepared for each Example), irradiating UV of wavelength 365 nm from a UV-LED lamp to the sample at 23°C under conditions: intensity 100 mW/cm² and dose 3,000 mJ/cm², allowing the composition to stand in air at 23°C for curing, and visually observing the cured state of the composition on the back side of the aluminum plate after 10 minutes, 1 hour, 6 hours, and 24 hours from UV irradiation.

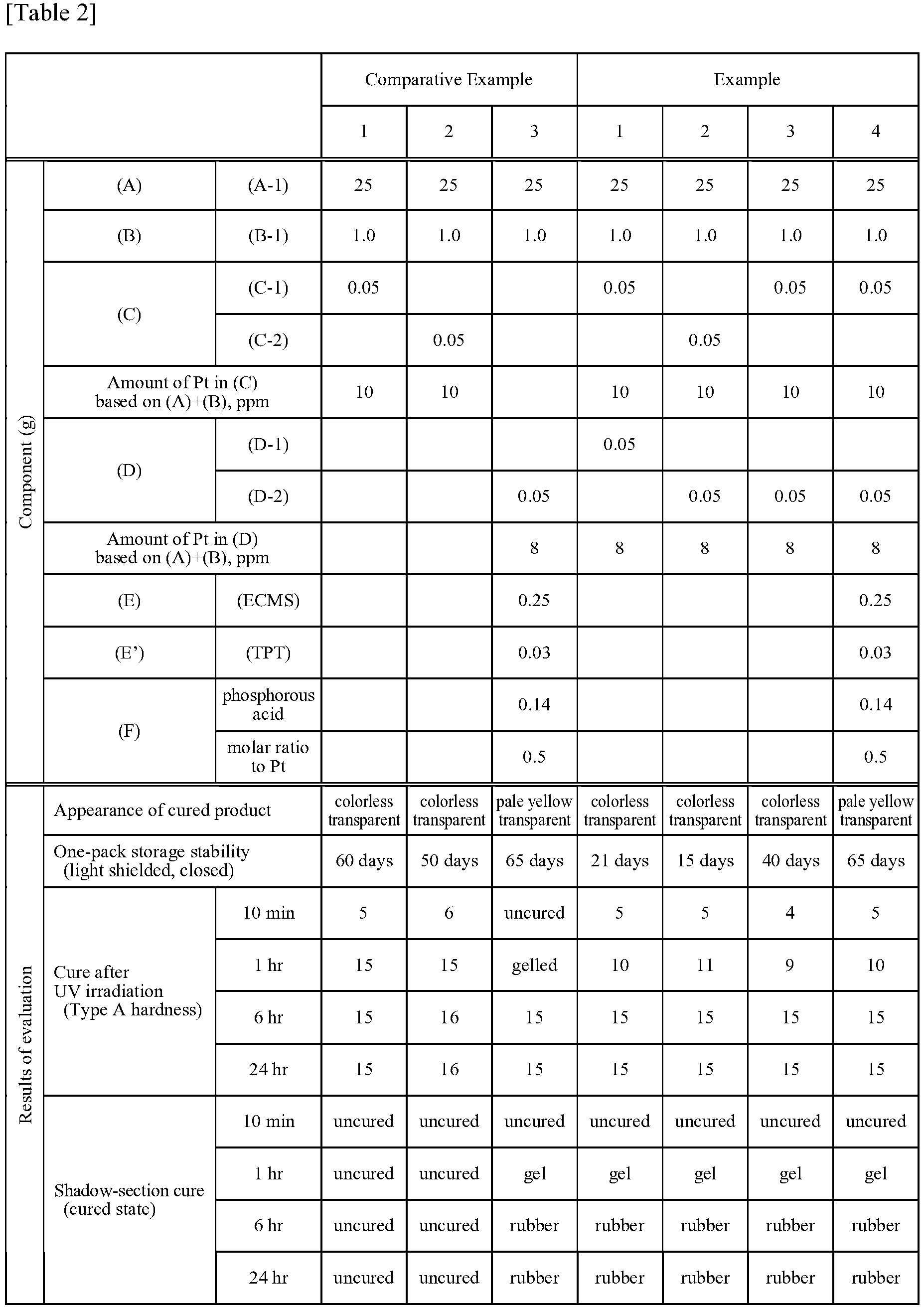

As seen from the results, the curable liquid silicone compositions within the scope of the invention exhibit excellent one-pack storage stability in a light-shielded, closed container. Upon UV irradiation, the platinum base catalyst in the irradiated section is activated so that hydrosilation addition reaction takes place. After subsequent standing in air, the platinum base catalyst mixture in the shadow section is activated so that hydrosilation addition reaction takes place. The compositions are thus cured into rubber or gel products.

## Claims

1. A curable liquid silicone composition comprising
(A) a diorganopolysiloxane having at least one alkenyl group per molecule,
(B) an organohydrogenpolysiloxane having at least two silicon-bonded hydrogen atoms per molecule, in an amount to provide 0.5 to 4 moles of silicon-bonded hydrogen in component (B) per mole of alkenyl group in component (A),
(C) a platinum base catalyst adapted to be activated with UV, in an amount to provide 0.1 to 1,000 ppm by weight of platinum atom in component (C) based on the total weight of components (A) and (B), and
(D) a platinum base catalyst mixture adapted to be activated with water and/or oxygen, in an amount to provide 0.1 to 1,000 ppm by weight of platinum atom in component (D) based on the total weight of components (A) and (B).

2. The curable liquid silicone composition of claim 1 which is of one pack type.

3. The curable liquid silicone composition of claim 1 or 2 wherein component (D) is an aerobic platinum base catalyst mixture consisting of a reaction mixture of a platinum-alkenyl-containing organosiloxane complex with an organosilicon compound having at least one silicon-bonded hydrogen atom per molecule in an amount to provide a molar excess of silicon-bonded hydrogen relative to the alkenyl group in the platinum-alkenyl-containing organosiloxane complex.

4. The curable liquid silicone composition of any one of claims 1 to 3, further comprising (E) 0.01 to 5% by weight based on the overall composition of a dehydrating agent.

5. The curable liquid silicone composition of any one of claims 1 to 4, further comprising (F) 0.1 to 1 mole per mole of platinum in the composition of a hydrosilation addition reaction inhibitor.

6. A method of curing the curable liquid silicone composition of any one of claims 1 to 5, comprising the steps of irradiating UV to the composition at room temperature and then exposing the composition to air for a predetermined time.
